# FASCICULE DE BREVET EUROPEEN

(11) **EP 4 288 901 B1**
(45) Date de publication et mention de la délivrance du brevet: **10.06.2026**
(21) Numéro de dépôt: 22707634.6
(22) Date de dépôt: 07.02.2022
(51) Int. Cl.: G06K 19/077

(54) **PROCÉDÉ DE FABRICATION DE MODULES DE CARTE À PUCE ET BANDE DE MATERIAU FLEXIBLE SUPPORTANT DE TELS MODULES**
VERFAHREN ZUR HERSTELLUNG VON CHIPKARTENMODULEN UND BAND AUS FLEXIBLEM MATERIAL ZUR UNTERSTÜTZUNG SOLCHER MODULE
METHOD FOR MANUFACTURING CHIP CARD MODULES AND BAND OF FLEXIBLE MATERIAL SUPPORTING SUCH MODULES

(30) Priorité: 08.02.2021 FR 2101198
(43) Date de publication de la demande: 13.12.2023
(73) Titulaire: Linxens Holding, 78200 Mantes-la-Jolie (FR)
(72) Inventeur: GLARIS, Patrice, 78200 MANTES-LA-JOLIE (FR); YEAP, Yean-Wei, Singapore 498810 (SG); THIENARD, Olivier, 78200 MANTES-LA-JOLIE (FR); MOUSQUE, Valérie, 78200 MANTES-LA-JOLIE (FR)
(74) Mandataire: INNOV-GROUP
(86) Numéro de dépôt international: PCT/EP2022/052825
(87) Numéro de publication internationale: WO 2022/167634

(56) Documents cités:
- EP-A1- 3 567 527
- WO-A1-2015/097400
- FR-A1- 3 009 411
- US-A1- 2011 011 939

## Description

### Domaine technique

L'invention concerne le domaine des cartes à puces. Les cartes à puce sont bien connues du public, qui en a de multiples usages : cartes de paiement, cartes SIM pour téléphones portables, cartes de transport, cartes d'identité, etc.

### Etat de la technique

Par exemple, les cartes à puce comportent des moyens de transmission pour transmettre des données de la puce à un dispositif lecteur de carte (lecture) ou de ce dispositif à la carte (écriture). Ces moyens de transmission peuvent être « à contact », « sans contact » ou bien à double-interface lorsqu'ils combinent les deux précédents moyens. L'invention concerne notamment le domaine des cartes à puce à double interface.

Les cartes à puce à double interface sont généralement constituées d'un support, ou corps de carte, rigide en matière plastique de type PVC, PVC/ABS, PET ou polycarbonate constituant l'essentiel de la carte, dans lequel sont incorporés un module électronique et une antenne, fabriqués chacun séparément. Le module électronique comporte donc un circuit imprimé généralement flexible muni d'une puce électronique (circuit intégré) et des plages de contacts électriquement connectées à la puce et affleurant sur le module électronique, en surface du corps de carte, pour une connexion par contact électrique avec un dispositif lecteur de carte. Les cartes à puce à double interface comportent en outre au moins une antenne pour transmettre des données entre la puce et un système radiofréquence permettant la lecture/écriture de données sans contact. L'utilisation d'un polymère chargé de particules conductrices pour établir une connexion entre des élements d'une carte à puce est connue notamment de EP3567527A1, FR3009411A1, US2011/011939A1 et WO2015/097400A1.

Dans les cartes à puce à double interface, il est relativement difficile de fournir une connexion électrique entre le module et l'antenne, robuste et fiable de manière à résister aux manipulations que peut subir une carte à puce. Cette connexion doit aussi être réalisée de manière suffisamment économique.

En outre, les modules de carte à puce doivent éventuellement être stockés sur des substrats pendant un temps relativement long pouvant aller jusqu'à plusieurs mois, avant d'être utilisés pour finaliser la fabrication de cartes à puce notamment en intégrant chaque module à un corps de carte et en connectant chaque module à une antenne intégrée au corps de carte.

Dans l'optique de répondre au moins partiellement aux exigences mentionnées ci-dessus, il est proposé un procédé de fabrication d'un module de carte à puce comprenant la fourniture d'un substrat diélectrique adapté à la réalisation de circuits électriques flexibles. Le substrat diélectrique a une épaisseur délimitée par une face avant et une face arrière, formant toutes deux les faces principales du substrat. Par ailleurs, le procédé comprend un dépôt d'un matériau polymère comprenant des particules conductrices. Ce dépôt peut être réalisé soit dans des puits de connexion pour faire la connexion avec des plages conductrices situées en face avant, soit directement sur des plages conductrices situées en face arrière. Ainsi, le matériau polymère comprenant des particules conductrices peut être déposé dans au moins deux puits de connexion ménagés dans l'épaisseur du substrat, chacun de ces puits de connexion étant au moins partiellement obturé au niveau de la face avant du substrat par une plage de contact formée dans un premier feuillet conducteur métallique (qui se trouve donc déposé sur la face avant du circuit électrique flexible, correspondant à la face contact du module ou « contact side » en anglais). Alternativement, le matériau polymère comprenant des particules conductrices peut être déposé sur une plage conductrice formée dans un deuxième feuillet métallique reposant sur la face arrière (ou « bonding side » en anglais). Eventuellement donc, le dépôt matériau polymère comprenant des particules conductrices peut être réalisé dans un puits de connexion et sur une plage conductrice située en face arrière. Le dépôt est réalisé de manière adaptée pour que le matériau polymère comprenant des particules conductrices forme après dépôt une surépaisseur sur la face arrière (c'est à dire en surépaisseur sur la face arrière elle-même si celle-ci ne comporte pas de deuxième feuillet conducteur - cas d'un circuit pour module simple face - ou en surépaisseur par rapport au deuxième feuillet conducteur - cas d'un circuit pour module double face).

Après dépôt, le matériau polymère comprenant des particules conductrices subit un figeage. Cette étape de figeage s'obtient spontanément ou par la mise en œuvre d'une ou plusieurs opérations supplémentaires. Plus précisément, le matériau polymère comprenant des particules conductrices est figé immédiatement après dépôt, soit spontanément du fait de ses propriétés rhéologiques et/ou du fait de ses transitions thermiques, soit par la mise en œuvre d'une ou plusieurs opérations supplémentaires visant à amorcer et/ou procéder à tout ou partie de sa polymérisation ou sa réticulation (par exemple irradiation sous rayonnement ultra-violet, exposition à une source de chaleur, etc.). Le figeage intervient préalablement à une opération de stockage au cours de laquelle au moins une portion de substrat, muni du premier feuillet conducteur et du matériau polymère comprenant des particules conductrices, est positionnée au-dessus ou en-dessous une autre portion de substrat. En effet, pour le stockage, il est possible d'enrouler le substrat en rouleau sur lui-même ou de déposer des portions de substrat sous forme de plaques, les unes sur les autres. Eventuellement, le procédé comprend une opération de réticulation du matériau polymère conducteur après que le substrat a été enroulé ou empilé sur lui-même. Cette opération de réticulation visant à conférer au matériau polymère conducteur ses propriétés rhéologiques définitives.

Grâce à la modification des propriétés viscoélastiques du matériau polymère comprenant des particules conductrices au cours du figeage, après dépôt, il est possible de stocker les modules (finis mais pas encore individualisés) sur des bandes de matériau flexible (en l'occurrence le substrat diélectrique) stockées avec un recouvrement de certaines portions de substrat, sans que le matériau polymère comprenant des particules conductrices n'adhère à la portion de la bande située en-dessous ou au-dessus celles-ci, ou encore à un matériau intercalaire qui serait placé entre les portions de substrat enroulées ou empilées les unes sur les autres.

Par exemple, dans le cas où le matériau polymère comprenant des particules conductrices est un polymère dit thermodurcissable, une opération additionnelle visant à réticuler au moins partiellement le matériau polymère peut être mise en œuvre. Cette opération de réticulation peut être réalisée alors que la bande de substrat est déjà enroulée sur elle-même ou en plaques empilées les unes sur les autres. Dans le cas d'une réticulation par voie thermique, la température appliquée est suffisamment élevée (par exemple supérieure à 50°C) pour conférer au matériau polymère ses propriétés finales, mais suffisamment faible (par exemple inférieure à 150°C) pour ne pas altérer les autres composants du module et ne pas provoquer l'écoulement du polymère non encore réticulé.

Le polymère comprenant des particules conductrices ainsi durci soit par réticulation en température, soit par solidification du fait de son refroidissement ou encore du fait de sa polymérisation devient un matériau ayant un module de conservation inférieur ou égal à 10⁸Pa et supérieur ou égal à 10³Pa, sous sollicitation oscillatoire à une fréquence d'1Hertz, et à une température comprise entre 120 et 170°C. Ces propriétés du polymère comprenant des particules conductrices ainsi durci demeurent néanmoins compatibles avec une réactivation de l'adhésion et/ou une réactivation de la pégosité suffisantes pour connecter chaque module à une antenne en appliquant au moins une pression sur les plots de connexion de l'antenne, et plus particulièrement au moins sur les zones au niveau desquelles se trouve le matériau polymère comprenant des particules conductrices.

A l'occasion de l'application d'une pression visant à connecter le module à une antenne, une augmentation de la température de travail peut faciliter la réactivation des propriétés adhésives du polymère comprenant des particules conductrices. Par exemple, cette opération est réalisée en même temps ou à la place de l'opération consistant à attacher le module au corps de carte à l'aide d'un adhésif réactivable à chaud (« Hot-melt » en anglais).

Le procédé mentionné ci-dessus comporte en outre avantageusement l'une ou l'autre des caractéristiques suivantes considérées indépendamment les unes des autres ou en combinaison d'une ou plusieurs autres :
- le dépôt du matériau polymère comprenant des particules conductrices est réalisé à une température comprise entre 20 et 120°C, par exemple à une température comprise entre 20 et 70°C ;
- le matériau polymère comprenant des particules conductrices est une résine ayant une viscosité, lors de son dépôt, comprise entre 1000 mPa.s et 100000 mPa.s, sous sollicitation oscillatoire en cisaillement à une fréquence de 10Hz à 25°C; par exemple, le matériau polymère est une résine mono-composant ou une résine bi-composants ; alternativement, le matériau polymère est une résine thermoplastique ayant une température de fusion comprise entre 90 et 140°C, et une viscosité lors de son dépôt, comprise entre 1000 et 100000 mPa.s sous sollicitation oscillatoire en cisaillement à une fréquence de 10Hz à 25°C, ledit dépôt étant réalisé à une température comprise entre 90 et 140°C ; encore alternativement le matériau polymère est un polymère sensible à la pression ayant une viscosité, lors de son dépôt, comprise entre 1000 mPa.s et 100000 mPa.s sous sollicitation oscillatoire en cisaillement à une fréquence de 10Hz à 25°C ;
- le matériau polymère comprenant des particules conductrices a des propriétés thixotropiques caractérisées par une augmentation de la viscosité jusqu'à une valeur au moins égale à 300000 mPa.s (et préférentiellement supérieure à 500000 mPa.s), sous cisaillement oscillatoire et à une fréquence de 0.1Hz à une température de 25°C, dans un intervalle de temps allant de 0 secondes à 600 secondes après le dépôt du matériau polymère : de telles propriétés thixotropiques permettent spontanément son figeage ; dans ce cas, le procédé peut ne pas comprendre d'opération de figeage additionnelle ;
- le figeage du matériau polymère après son dépôt est obtenu par réticulation sous rayonnement ultra-violet, en un temps inférieur à 600 secondes après ce dépôt ;

Selon un autre aspect de l'invention, il est proposé un procédé d'interconnexion d'une antenne et d'un module de carte à puce, selon la revendication 10, comprenant
- la fourniture d'un module de carte à puce obtenu par un procédé tel que mentionné ci-dessus,
- la fourniture d'un corps de carte dans lequel est intégrée une antenne comportant au moins deux plots de connexion, et
- la connexion d'au moins l'un des deux plots de connexion avec une plage de contact obturant au moins partiellement un puit de connexion dans lequel est déposé du matériau polymère comprenant des particules conductrices, ou avec une plage conductrice formée dans le deuxième feuillet conducteur reposant sur la face arrière et sur laquelle est déposé du matériau polymère comprenant des particules conductrices, cette connexion étant opérée en appliquant une pression comprise entre 0,5 et 5 bars, avec une thermode dont la température est comprise entre 170 et 210°C et pendant un temps inférieur à 3 secondes.

Une bande de matériau flexible est décrite ci-dessous, celle-ci supportant une pluralité de modules de carte à puce obtenus par un procédé tel que mentionné ci-dessus, enroulée sur elle-même ou en plaques empilées les unes sur les autres (avec ou sans matériau intercalaire entre deux couches superposées de cette bande).

Une carte à puce à double interface est décrite ci-dessous, celle-ci comprenant un module et une antenne interconnectés à l'aide d'un procédé tel que mentionné ci-dessus.

D'autres caractéristiques et avantages de l'invention apparaîtront à la lecture de la description détaillée et des dessins annexés sur lesquels :
- FIG. 1 représente schématiquement en perspective un exemple de carte à puce à double interface dans laquelle le module n'a pas encore été intégré, le module étant représenté trois fois, dont deux fois avec la face contact visible et une fois avec la face de connexion visible ;
- FIG. 2 représente schématiquement un exemple de mise en œuvre d'un procédé de fabrication, de bobine à bobine, d'un module de carte à puce ;
- FIG. 3 représente en coupe, partiellement et schématiquement, un exemple de mise en œuvre de l'une des opérations du procédé représenté sur la figure 2, cette opération correspondant au remplissage de certains puits de connexion avec un matériau comprenant des particules électriquement conductrices ;
- FIG. 4 représente en coupe, partiellement et schématiquement, avant enroulement sur une bobine de stockage, une bande de matériau flexible supportant une pluralité de modules de carte à puce obtenus par le procédé représenté sur la figure 2 ;
- FIG. 5 représente en coupe, partiellement et schématiquement, un exemple de mise en œuvre d'une opération d'encartage d'un module de carte à puce obtenu par le procédé représenté sur la figure 2 ; et
- FIG. 6 représente schématiquement l'emprise du matériau comprenant des particules électriquement conductrices sur des pistes d'une extrémité d'antenne.

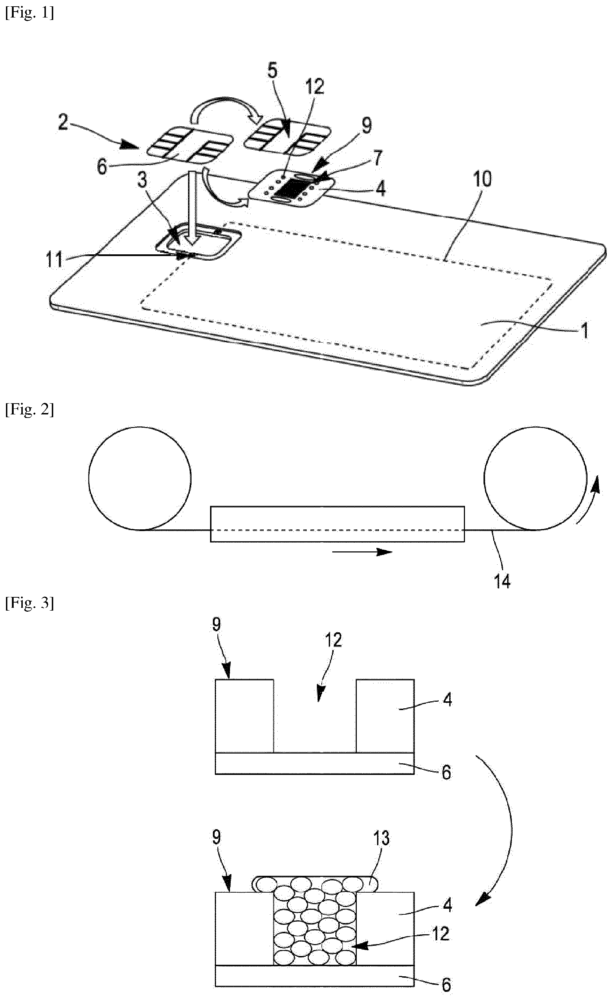

Comme représenté sur la figure 1, l'invention peut être utilisée pour la réalisation d'une carte à puce 1 (de type carte bancaire ou autre). Cette carte 1 comporte un module 2 destiné à être inséré dans une cavité 3, par exemple fraisée dans le corps de la carte 1. Ce module 2 se compose d'un circuit électrique flexible comprenant un substrat 4 diélectrique. Le substrat 4 se présente initialement sous forme d'une bande de matériau ayant une première et une deuxième faces principales essentiellement parallèles entre elles et distantes de l'épaisseur du substrat 4. Le substrat 4 a une épaisseur, une souplesse et une flexibilité compatibles avec, d'une part, sa mise en œuvre dans un procédé de fabrication de bobine à bobine en continu et, d'autre part, avec les normes et standards déterminant l'épaisseur maximale des cartes à puce finies. L'exemple de mise en œuvre du procédé selon l'invention décrit ci-dessous et illustré par les figures concerne une mise en œuvre du substrat 4 de bobine à bobine (« reel-to-reel » ou « roll-to-roll » en anglais), et/ou comprenant au moins une opération de stockage en bobine. Alternativement, le procédé selon l'invention peut être mis en œuvre avec un substrat 4 sous forme de plaque, et/ou peut comprendre au moins une opération de stockage en plaques de substrat. Le substrat 4 est généralement mince. Son épaisseur, avantageusement inférieure à 400µm, est par exemple de l'ordre de 20 à 200µm, voire comprise entre 50 et 150µm. Ce substrat 4 est par exemple constitué d'une bande souple de matériau plastique (polyimide, PET, PEN, PVC, etc.) ou de matériau composite (verre-époxy).

Sur l'une des faces de ce substrat 4, dite face avant 5 (ou face contact), sont réalisées, dans un premier feuillet conducteur 6, des plages conductrices isolées électriquement les unes des autres. Ces plages conductrices peuvent comprendre des contacts destinés à établir un contact avec un lecteur de carte ainsi que d'autres plages conductrices, non-utilisées dans la connexion avec les contacts d'un lecteur de cartes. La réalisation des plages conductrices peut se faire par gravure du premier feuillet conducteur 6. Ce dernier est constitué d'un matériau électriquement conducteur tel qu'un alliage de cuivre (alternativement de l'aluminium, un alliage d'aluminium ou un acier peut également constituer ce matériau électriquement conducteur). Dans ce cas, préalablement à sa gravure, le premier feuillet conducteur 6 est collé et/ou laminé sur le substrat 4, avec ou sans couche de colle entre le substrat 4 et le premier feuillet conducteur 6. Alternativement, la réalisation des plages conductrices peut se faire par découpe (technique dite du « leadframe » selon la terminologie anglo-saxonne) dans le premier feuillet conducteur 6, préalablement à son collage et/ou sa lamination sur le substrat 4 (également avec ou sans couche de colle entre le substrat 4 et le premier feuillet conducteur 6).

Dans tous les cas, le premier feuillet conducteur 6 est donc finalement supporté par le substrat 4, avec une face tournée vers une première face principale, correspondant à la face avant 5 du substrat 4 (voir figures 3 à 5), tandis que l'autre face est destinée à établir une connexion par contact électrique avec un lecteur de cartes à puce. Le premier feuillet conducteur 6 peut recevoir sur l'une et/ou l'autre de ses faces, diverses couches de métallisation (nickel, or, palladium, etc.). La qualité de la face du premier feuillet conducteur 6 (généralement métallisée) tournée vers le substrat 4 est importante notamment pour assurer une bonne connexion à la puce 7, par exemple par soudure de fils conducteurs 8. Le substrat 4 avec les plages conductrices 6 constitue un circuit électrique flexible métallisé.

Sur la deuxième face principale du substrat 4, dite face arrière 9 (ou face de connexion), le substrat 4 supporte la puce électronique 7. La fixation mécanique de la puce 7 sur le substrat 4 est réalisée par au moins une technique connue telle que le fixage de puce (« die-attach » selon la terminologie anglo-saxonne) et sa connexion électrique aux plages conductrices est réalisée par au moins une technique connue telle que la technologie de la puce retournée (« flip-chip » selon la technologie anglo-saxonne), la soudure de fils (« wire-bonding » selon la terminologie anglo-saxonne), etc. Dans le mode de réalisation décrit ci-dessous, la technique par soudure de fils est utilisée comme exemple.

Une antenne 10 (par exemple de taille Classe 1 ou Classe 2 selon la norme ISO 14443-1) peut comporter plusieurs spires et est insérée dans le corps de la carte 1, entre deux couches laminées. Les extrémités 11 de cette antenne 10 sont accessibles dans la cavité 3, après fraisage de celle-ci, pour une connexion avec la puce 7.

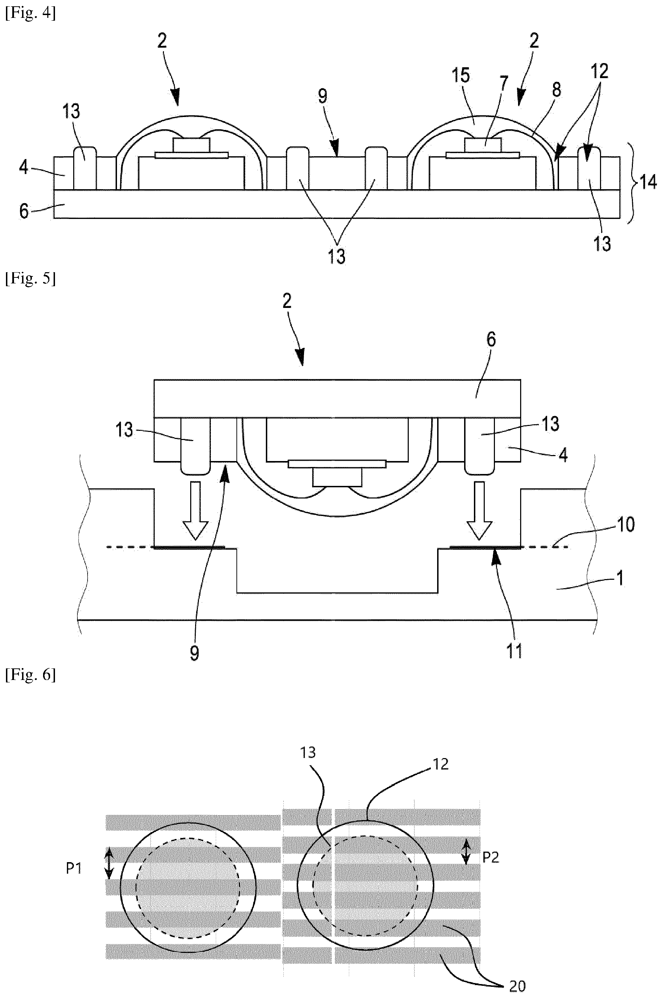

Les plages conductrices destinées à former des contacts sont connectées à la puce 7 avec les fils conducteurs 8 (non-visibles sur la figure 1, mais représentés sur les figures 4 et 5) à travers des puits de connexion 12 ménagés dans le substrat 4. Ces puits de connexion 12 sont par exemple réalisés par perforation mécanique du substrat 4, avant lamination du premier feuillet conducteur 6 avec le substrat 4. Alternativement ils peuvent être réalisés au laser (par exemple dans le cas de l'utilisation d'un substrat laminé, tel qu'un laminé de cuivre ou « copperclad » en anglais). Le premier feuillet conducteur 6 recouvre alors au moins en partie les puits de connexion 12. La face du premier feuillet conducteur 6 tournée vers le substrat 4 forme donc le fond de ces puits de connexion 12. Les puits de connexion 12 forment alors des trous borgnes et permettent l'accès à la face avant 5, depuis la face arrière 9, avec seulement le premier feuillet conducteur 6 sur la face avant 5.

Les dimensions et positions des plages conductrices sont définies de manière à satisfaire la norme ISO 7816-2 notamment. Par exemple, selon la norme ISO 7816-2, les plages conductrices sont nommées C1 à C8 pour un module 2 à huit contacts. Dans ce cas, les plages conductrices C1, C2, C3, C5, C6 et C7 sont prévues pour établir une communication avec la puce 7, par contact sur la face avant 6. Il reste donc au moins deux plages conductrices, sous chacune desquelles respectivement se trouve un puits de connexion 12, et qui peuvent être utilisés pour participer à la connexion de l'antenne 10 à la puce 8. A cette fin, comme représenté sur la figure 3, un matériau polymère 13 comprenant des particules conductrices est déposé dans chacun de ces deux puits de connexion 12. Chacun de ces deux puits de connexion 12 est rempli de ce matériau polymère 13 par dispense ou par jet d'une goutte de celui-ci (alternativement une méthode sérigraphique peut être utilisée).

Lors de son dépôt dans les puits de connexion 12, le matériau polymère 13 a des propriétés thixotropiques telles qu'elles permettent une augmentation, pendant un temps allant de 0 secondes à 600 secondes après le dépôt, de la viscosité jusqu'à une valeur supérieure à 300000 mPa.s, sous cisaillement oscillatoire et à une fréquence de 0.1Hz.

### Exemple 1 : Colle époxy bi-composant

Selon un premier exemple, une puce 7 est fixée sur la face arrière 9 du substrat 4 à l'aide d'une technologie de fixage de puce, comme mentionné plus haut. La puce 7 est connectée électriquement à certaines plages conductrices à l'aide de fils de connexion 8. La puce 7 et ses fils de connexion 8 sont encapsulés dans une résine d'encapsulation 15 réticulée après son dépôt sous rayonnement ultra-violet. Cette réticulation peut se faire notamment en deux étapes : une première étape peu de temps après son dépôt et une deuxième étape, dite de post-réticulation, destinée à optimiser ses propriétés mécaniques.

Le matériau polymère 13 est une résine bi-composant préparée par mélange des deux parts dans les conditions préconisées par le fournisseur. A l'aide d'un équipement de dispense, le mélange ainsi préparé et constituant le matériau polymère 13 comprenant des particules conductrices est déposé à température ambiante dans au moins un trou de connexion 12. Le matériau polymère 13 est par exemple une résine epoxy bi-composant constituée d'un polymère époxy et de particules conductrices de type particules d'argent.

Au moment de son dépôt dans les puits de connexion 12, le matériau polymère 13 comprenant des particules conductrices a une viscosité dont la valeur est compatible avec le dépôt du matériau polymère 13 par dispense, dans les trous de connexion 12. Par exemple, cette valeur de la viscosité est comprise entre 30000 et 60000 mPa.s sous sollicitation de cisaillement oscillatoire réalisée à 25°C à une fréquence de 10Hz.

Immédiatement après la dispense du matériau polymère 13 comprenant des particules conductrices, sa viscosité augmente au-delà d'une valeur de 500000 mPa.s. Cette augmentation de viscosité permet le figeage du matériau 13 sans pour autant que celui-ci ait été réticulé à ce stade du procédé. Ainsi figé, la forme de la goutte de matériau polymère 13 demeure stable en absence de sollicitation (telle qu'une pression du doigt, la pression d'un liner, un contact avec un corp étranger...). Cette augmentation de la viscosité permet d'enrouler le substrat sous forme d'une bobine sans modifier la forme du matériau polymère 13 initialement donnée lors de la dispense.

La bande de substrat 4 flexible ainsi enroulée sur elle-même est portée à une température de 70°C pendant 12 heures. Cette opération visant initialement à assurer la post réticulation de la résine d'encapsulation 15 est utilisée avantageusement pour réticuler dans le même temps le matériau polymère conducteur 13 préalablement déposé par dispense.

A l'issue de cette opération de réticulation, le matériau polymère 13 a un module de conservation, sous sollicitation de traction oscillatoire à 1Hz, égal à 3,5 x 10⁷ Pa, pour une température de mesure comprise entre 120 et 170°C.

Lors de l'encartage (opération consistant à intégrer le module 2 dans le corps d'une carte à puce 1), le matériau polymère 13, qui a gardé les propriétés viscoélastiques mentionnées ci-avant, établit une connexion électrique élastique avec chacune des extrémités 11 de l'antenne 10. Une pression est appliquée sur le module 2, au moins au niveau des puits de connexion 12 remplis de matériau polymère 13. Cette pression, avantageusement voisine ou égale à 1 bar, est appliquée, pendant un temps avantageusement voisin ou égal à 1 seconde, avec une thermode dont la température est comprise entre 170 et 190°C.

### Exemple 2 : résine époxy mono-composant

Selon un deuxième exemple, le procédé décrit ci-dessus en relation avec le premier exemple (résine bi-composant) ne diffère essentiellement de ce dernier que par le fait que le matériau polymère 13 est une résine epoxy mono-composant. Par exemple, il s'agit d'une résine dont le nom commercial est compris dans la liste suivante : Henkel CA3556HF, Henkel ICP8282.

### Exemple 3 : Thermoplastique ayant une température de fusion comprise entre 100°C et 140°C.

Selon un troisième exemple, une puce 7 est fixée sur la face arrière 9 du substrat 4 à l'aide d'une technologie de fixage de puce, comme mentionné plus haut. La puce 7 est connectée électriquement à certaines plages conductrices à l'aide de fils de connexion 8. La puce 7 et ses fils de connexion 8 sont encapsulés dans une résine d'encapsulation 15 réticulée, après son dépôt, sous rayonnement ultra-violet.

Le matériau polymère 13 est par exemple une colle conductrice constituée d'un polymère thermoplastique et de particules conductrices. Par exemple, il s'agit d'une résine polyester thermoplastique chargée avec des particules d'argent.

Le matériau polymère 13 comprenant des particules conductrices a une température de fusion de 100°C et son dépôt dans les puits de connexion 12 est alors réalisé à une température de 120°C.

Au moment de son dépôt dans les puits de connexion 12, le matériau polymère 13 comprenant des particules conductrices a une viscosité inférieure à 100000mPa.s.

Immédiatement après dispense du matériau polymère 13 comprenant des particules conductrices et dans un intervalle de temps inférieur à 600 secondes, la température du matériau polymère 13 est ramenée en dessous de sa température de fusion. Il en résulte une recristallisation qui permet d'augmenter la viscosité du matériau polymère 13 jusqu'à une valeur supérieure à 300000 mPa.s. Avec une telle viscosité, la forme de la goutte de matériau polymère 13 déposée au niveau des trous de connexion 12, demeure stable en absence de sollicitation. L'augmentation de la viscosité permet alors d'enrouler le substrat 4 sous forme d'une bobine sans modifier la forme du matériau polymère 13 initialement donnée lors de la dispense.

Le matériau polymère 13 a un module de conservation, à 1Hz, inférieur ou égal à 10⁸Pa et supérieur ou égal à 10³Pa, à une température comprise entre 120 et 170°C.

Lors de l'encartage, le matériau polymère 13 dont les propriétés viscoélastiques sont celles mentionnées plus haut, établit une connexion électrique élastique avec chacune des extrémités 11. Une pression est appliquée sur le module 2, au moins au niveau des puits de connexion 12 remplis de matériau polymère 13. Cette pression, avantageusement voisine ou égale à 1 bar est appliquée pendant un temps de 2,5 secondes avec une thermode ayant une température comprise entre 170 et 190°C.

### Exemple 4 : Polymère sensible à la pression

Selon un quatrième exemple, une puce 7 est fixée sur la face arrière 9 du substrat 4 à l'aide d'une technologie de fixage de puce, comme mentionné plus haut. La puce 7 est connectée électriquement à certaines plages conductrices à l'aide de fils de connexion 8. La puce 7 et ses fils de connexion 8 sont encapsulés dans une résine d'encapsulation 15 réticulée, après son dépôt, sous rayonnement ultra-violet.

On dépose à température ambiante dans au moins un trou de connexion 12, le matériau polymère 13 comprenant des particules conductrices. Par exemple, le matériau polymère 13 comprenant des particules conductrices correspond à une formulation de monomères et oligomères acryliques polymérisables par UV et chargée de particules conductrices. Par exemple, il s'agit de la résine commercialisée sous la référence 127-41 par la société Creative Materials.

Au moment du dépôt du matériau polymère 13 comprenant des particules conductrices, sa viscosité est de l'ordre de 20000 à 30000 mPa.s, dans les conditions de mesure suivantes : Sollicitation en cisaillement oscillatoire, à une fréquence de 10 Hertz et à une température de 25°C. Cette viscosité permet la dispense du matériau polymère 13 comprenant des particules conductrices dans les trous de connexion 12.

Immédiatement après dispense du matériau polymère 13 comprenant des particules conductrices la bande flexible du substrat 4 est exposée, pendant une durée comprise entre quelques secondes (par exemple 2 secondes) et une minute, à un rayonnement ultraviolet généré par une lampe à vapeur de mercure. Le matériau polymère 13 comprenant des particules conductrices ainsi polymérisé forme un adhésif sensible à la pression. Après cette polymérisation, la forme de la goutte de matériau polymère 13 déposée au niveau des trous de connexion 12, demeure stable.

Eventuellement, la résine d'encapsulation 15 subit une opération de post-réticulation en l'exposant à une température de 70°C pendant 12 heures.

A l'issue de la polymérisation, le matériau polymère 13 a un module de conservation, sous sollicitation de cisaillement oscillatoire à 1Hz, de l'ordre de 10³ Pa.s, à une température comprise entre 120 et 170°C.

Lors de l'encartage, le matériau polymère 13 établit une connexion électrique élastique avec chacune des extrémités 11 de l'antenne 10. Une pression est appliquée sur le module 2, au moins au niveau des puits de connexion 12 remplis de matériau polymère 13. Cette pression avantageusement voisine ou égale à 1 bar est appliquée, pendant une durée avantageusement voisine ou égale à 2 secondes, à l'aide d'une thermode dont la température est comprise entre 170 et 210°C. Dans cet exemple, la pégosité du matériau polymère 13 contribue à générer une adhésion pérenne entre le matériau polymère 13 et les extrémités 11 de l'antenne 10.

Dans tous les cas, et notamment pour les exemples mentionnés ci-dessus, le dépôt de la goutte de matériau polymère 13 est réalisé de manière adaptée pour que le matériau polymère 13 comprenant des particules conductrices forme après dépôt un dôme en surépaisseur sur la face arrière 9. Cette opération de dépôt d'une goutte de matériau polymère 13 dans un puits de connexion 12 peut être effectuée en continu, de rouleau à rouleau comme illustré sur la figure 2, après des opérations de photolithogravure (pour former les plages conductrices dans le premier feuillet conducteur 6), d'électrodéposition de couches métalliques (nickel, or et/ou palladium par exemple), etc.

Avantageusement, le matériau polymère 13, après son dépôt dans les puits de connexion 12 et une éventuelle opération de figeage ou durcissement, ne développe des propriétés d'adhésion que lorsqu'il est soumis à une pression.

A l'issue des traitements correspondant au procédé décrit et illustré à l'aide des exemples ci-dessus, on obtient une bande 14 de matériau flexible supportant une pluralité de modules de carte à puce. Cette bande 14 est alors enroulée sur elle-même, avec ou sans matériau intercalaire entre deux couches ou spires superposées de cette bande 14. Autrement dit, du fait de ses propriétés après figeage ou durcissement, le matériau polymère 13 n'adhère pas aux surfaces de la bande 14 amenées à être à son contact au cours de l'enroulement de la bande 14 et de son stockage en rouleau. Néanmoins, un matériau intercalaire peut être utilisé pour assurer une protection mécanique des modules de carte à puce.

Une portion de cette bande 14 est représentée sur la figure 4. Cette portion de bande 14 correspond par exemple à ce qui est obtenu après déroulement de la bande 14, en vue de l'encartage des modules 2 qu'elle comporte. Sur la portion représentée, il y a deux modules 2. Chaque module 2 comporte une puce 7 connectée à des contacts gravés dans le premier feuillet conducteur 6, par des fils conducteurs 8 passant par des puits de connexion 12. Chaque puce 7 ainsi que les fils conducteurs qui lui sont connectés sont protégés par une résine d'encapsulation 15 (« glob top » en anglais). En dehors de la résine d'encapsulation 15, donc non recouverts de la résine d'encapsulation 15, demeurent pour chaque module 2, encore au moins deux puits de connexion 12. Chacun de ces deux puits de connexion 12 est rempli de matériau polymère 13 figé, durci. Le matériau polymère 13 dépasse, en surépaisseur, sur la face arrière 9. Par exemple, le matériau polymère 13 dépasse d'une hauteur comprise entre 60 et 250 micromètres, par exemple cette hauteur est voisine de 150 micromètres.

Avant encartage, les modules 2 sont individualisés. Comme représenté sur la figure 5, chaque module 2 est encarté en le plaçant dans une cavité 3 préalablement fraisée dans le corps de la carte 1. Le fraisage fait notamment apparaître les extrémités 11 de l'antenne 10. Ces extrémités 11 sont, par exemple, pourvues chacune respectivement d'une plaquette conductrice à laquelle chacune d'elles est connectée (par exemple par soudure). Alternativement, les extrémités 11 forment des zigzags. Comme illustré schématiquement par la figure 6, de tels zigzags comportent des pistes 20 (formées de fils encastrés dans un support ou de bandes gravées dans une couche conductrice supportée par un substrat isolant). L'écartement entre les pistes 20 détermine un pas. Ces pistes 20 sont écartées les unes des autres avec un certain pas plus ou moins régulier (sur la figure 6, les extrémités des pistes 20 reliées entre elles pour former le zigzag ne sont pas représentées). A gauche sur la figure 6, les pistes 20 sont écartées d'un pas P1 plus grand que le pas P2 des pistes 20 représentées à droite. Il en résulte que le dôme de matériau 13 comportant des particules conductrices remplissant un trou de connexion 12, connecte électriquement moins de pistes 20 dans la configuration illustrée à gauche que dans la configuration illustrée à droite (3 pistes à gauche, 4 pistes à droite). Ainsi, avantageusement, le pas des pistes 20 formant un zigzag est inférieur ou égal à 250 micromètres et, plus préférentiellement voisin ou égal à 200 micromètres. Si les pistes sont trop espacées, il peut arriver que le matériau 13 comprenant des particules conductrices, notamment s'il n'est pas centré par rapport au zigzag, n'établisse plus une connexion électrique suffisante avec les extrémités 11 de l'antenne 10.

Eventuellement, le module 2 est collé dans sa cavité 3 à l'aide d'un adhésif réactivable à chaud et une pression est appliquée au matériau polymère 13 et au niveau de l'adhésif réactivable à chaud au cours de l'opération de collage du module 2 dans sa cavité 3.

En substance, le matériau polymère 13 a, au moment de son dépôt dans un puits de connexion 12, une viscosité avantageusement inférieure à 100000 mPa.s, mesurée sous sollicitation de cisaillement oscillatoire à 25°C et à une fréquence de 10Hz. Après ce dépôt, le matériau polymère 13 fige spontanément ou subit une opération pour qu'il fige, de manière à ce qu'il ait un module de conservation, sous sollicitation de cisaillement oscillatoire à 1Hz, compris entre 10³ Pa.s et 10⁸ Pa.s, à une température comprise entre 120 et 170°C. Au moment de l'encartage, le matériau polymère 13 subit une pression, ainsi qu'un éventuel chauffage, afin de réactiver ses propriétés adhésives et/ou de pégosité.

Il a été décrit ci-dessus un procédé de fabrication d'un module 2 simple face, c'est-à-dire dans ne comportant qu'un premier feuillet conducteur 6 en face avant. Dans ce cas, le matériau polymère 13 est déposé dans des puits de connexion 12. Mais, l'invention concerne également un procédé de fabrication d'un module 2 double face. Dans ce cas, le substrat 4 comporte un premier et un deuxième feuillets conducteurs, respectivement sur chacune de ses faces principales. Le matériau polymère 13 peut alors être déposé sur des plages conductrices formées dans le deuxième feuillet conducteur qui se trouve donc sur la face arrière du substrat 4. Les opérations subséquentes au dépôt du matériau polymère 13 sur ces plages conductrices sont analogues à celles décrites ci-dessus en relation avec la réalisation d'un module simple face.

## Revendications

1. Procédé de fabrication d'au moins un module (2) de carte à puce (1) comprenant
- la fourniture d'un substrat diélectrique (4) flexible en bande, le substrat (4) ayant une épaisseur délimitée par une face avant (5) et une face arrière (9), formant toutes deux les faces principales du substrat (4), avec au moins une plage conductrice formée dans un premier feuillet conducteur (6) reposant sur la face avant (5),
- le dépôt d'un matériau polymère (13) comprenant des particules conductrices de manière adaptée pour que le matériau polymère (13) comprenant des particules conductrices forme après dépôt une surépaisseur sur la face arrière (9), ce dépôt étant réalisé selon au moins l'une des deux options suivantes :
• dans au moins un puits de connexion (12) ménagé dans l'épaisseur du substrat (4), ledit au moins un puits de connexion étant au moins partiellement obturé au niveau de la face avant (5) du substrat (4) par une plage conductrice formée dans le premier feuillet conducteur (6),
• sur une plage conductrice formée dans un deuxième feuillet conducteur reposant sur la face arrière (9),
**caractérisé par le fait que**
- le matériau polymère (13) comprenant des particules conductrices présente, au moment du dépôt, une viscosité comprise entre 1000 et 100000 mPa.s, mesurée sous sollicitation de cisaillement oscillatoire à 25°C et à une fréquence de 10Hz,
- le procédé comprend une étape de figeage du matériau polymère (13) comprenant des particules conductrices, et
- une opération de stockage, comprenant l'enroulement sur lui-même du substrat (4), muni du premier feuillet conducteur et du matériau polymère (13) comprenant des particules conductrices, ou l'empilement de portions du substrat (4) sous forme de plaques, cette opération de stockage succédant à l'étape de figeage et précédant une opération consistant à intégrer ledit au moins un module (2) dans le corps d'une carte à puce (1), et au cours de laquelle opération de stockage au moins une portion de substrat (4), munie du premier feuillet conducteur et du matériau polymère (13) comprenant des particules conductrices, est positionnée au-dessus ou en-dessous d'une autre portion de substrat (4), cette autre portion de substrat (4) provenant soit du substrat (4) enroulé sur lui-même, soit d'une plaque de substrat (4) déposée au-dessus ou au-dessous de ladite au moins une portion de substrat (4), munie du premier feuillet conducteur et du matériau polymère (13) comprenant des particules conductrices, le matériau polymère (13) comprenant des particules conductrices étant configuré par l'étape de figeage pour ne pas adhérer à cette autre portion du substrat (4) et pour permettre par au moins l'application d'une pression, la connexion dudit au moins un module (2) à une antenne (10).

2. Procédé selon la revendication 1, dans lequel le matériau polymère (13) comprenant des particules conductrices est un matériau ayant un module de conservation, après figeage, inférieur ou égal à 10⁸Pa et supérieur ou égal à 10³Pa, sous sollicitation oscillatoire à une fréquence d'1Hertz, et à une température comprise entre 120 et 170°C.

3. Procédé selon l'une des revendications précédentes, dans lequel le dépôt du matériau polymère (13) comprenant des particules conductrices est réalisé à une température comprise entre 20 et 70°C.

4. Procédé selon l'une des revendications 1 et 2, dans lequel le matériau polymère (13) comprenant des particules conductrices est une résine thermoplastique ayant une température de fusion comprise entre 90 et 140°C et dans lequel ce dépôt du matériau polymère (13) est réalisé à une température comprise entre 90 et 140°C.

5. Procédé selon l'une des revendications 1 à 3, dans lequel le matériau polymère (13) comprenant des particules conductrices est un adhésif sensible à la pression.

6. Procédé selon l'une des revendications précédentes, dans lequel le matériau polymère (13) comprenant des particules conductrices a des propriétés thixotropiques **caractérisées par** une viscosité devenant supérieure à 300000 mPa.s, sous sollicitation en cisaillement à une fréquence de 0.1Hz, après un temps allant de 0 secondes à 600 secondes suivant le moment du dépôt du matériau polymère (13).

7. Procédé selon l'une des revendications précédentes, dans lequel le matériau polymère (13) comprenant des particules conductrices subit une opération de figeage en l'exposant à un rayonnement ultraviolet.

8. Procédé selon l'une des revendications précédentes, dans lequel le matériau polymère (13) comprenant des particules conductrices subit, après dépôt, une opération de chauffage.

9. Procédé selon l'une des revendications précédentes, dans lequel le matériau polymère (13) comprenant des particules conductrices forme une surépaisseur sur la face arrière (9) dont la hauteur est comprise entre 60 et 250 micromètres.

10. Procédé d'interconnexion d'une antenne (10) et d'un module (2) de carte à puce (1) comprenant
- la fourniture d'un substrat diélectrique (4) flexible en bande, le substrat (4) ayant une épaisseur délimitée par une face avant (5) et une face arrière (9), formant toutes deux les faces principales du substrat (4), avec au moins une plage conductrice formée dans un premier feuillet conducteur (6) reposant sur la face avant (5),
- le dépôt d'un matériau polymère (13) comprenant des particules conductrices de manière adaptée pour que le matériau polymère (13) comprenant des particules conductrices forme après dépôt une surépaisseur sur la face arrière (9), ce dépôt étant réalisé selon au moins l'une des deux options suivantes :
- dans au moins un puits de connexion (12) ménagé dans l'épaisseur du substrat (4), ledit au moins un puits de connexion étant au moins partiellement obturé au niveau de la face avant (5) du substrat (4) par une plage conductrice formée dans le premier feuillet conducteur (6),
- sur une plage conductrice formée dans un deuxième feuillet conducteur reposant sur la face arrière (9),
- la fourniture d'un corps de carte dans lequel est intégrée une antenne (10) comportant au moins deux extrémités de connexion (11),
- la connexion d'au moins l'une des deux extrémités de connexion (11) avec ladite plage conductrice formée dans le premier feuillet conducteur (6) obturant au moins partiellement ledit au moins un puits de connexion (12) dans lequel est déposé du matériau polymère (13) comprenant des particules conductrices, ou avec ladite plage conductrice formée dans le deuxième feuillet conducteur reposant sur la face arrière (9) et sur laquelle est déposé du matériau polymère comprenant des particules conductrices,
ce procédé étant **caractérisé par le fait que**
- le matériau polymère (13) comprenant des particules conductrices présente, au moment du dépôt, une viscosité comprise entre 1000 et 100000 mPa.s, mesurée sous sollicitation de cisaillement oscillatoire à 25°C et à une fréquence de 10Hz,
- il comprend une étape de figeage du matériau polymère (13) comprenant des particules conductrices, et une opération de stockage, comprenant l'enroulement sur lui-même du substrat (4), muni du premier feuillet conducteur et du matériau polymère (13) comprenant des particules conductrices, ou l'empilement de portions du substrat (4) sous forme de plaques, cette opération de stockage succédant à l'étape de figeage et précédant une opération consistant à intégrer ledit au moins un module (2) dans le corps d'une carte à puce (1), et au cours de laquelle opération de stockage au moins une portion de substrat (4), munie du premier feuillet conducteur et du matériau polymère (13) comprenant des particules conductrices, est positionnée au-dessus ou en-dessous d'une autre portion de substrat (4), cette autre portion de substrat (4) provenant soit du substrat (4) enroulé sur lui-même, soit d'une plaque de substrat (4) déposée au-dessus ou au-dessous de ladite au moins une portion de substrat (4), munie du premier feuillet conducteur et du matériau polymère (13) comprenant des particules conductrices, le matériau polymère (13) comprenant des particules conductrices étant configuré par l'étape de figeage pour ne pas adhérer à cette autre portion du substrat (4) et pour permettre par au moins l'application d'une pression, la connexion dudit au moins un module (2) à une antenne (10).

11. Procédé d'interconnexion selon la revendication 10, dans lequel la connexion est opérée en appliquant une pression comprise entre 0,5 et 5 bars, avec une thermode dont la température est comprise entre 170 et 210°C et pendant un temps inférieur à 3 secondes.

12. Procédé d'interconnexion selon la revendication 10 ou 11, dans lequel la connexion entre l'antenne (10) et le module (2) de carte à puce (1) est réalisé en appliquant le matériau polymère (13) comprenant des particules conductrices sur une portion d'extrémité de l'antenne (10) formant des zigzags comprenant des pistes espacées les unes des autres avec un pas inférieur à 250 micromètres.

## Patentansprüche

1. Verfahren zur Herstellung mindestens eines Chipkartenmoduls (2) einer Chipkarte (1), umfassend
• die Bereitstellung eines flexiblen dielektrischen Substrats (4) in Bandform, wobei das Substrat (4) eine durch eine Vorderseite (5) und eine Rückseite (9) begrenzte Dicke aufweist, die beide die Hauptflächen des Substrats (4) bilden, mit mindestens einem leitfähigen Bereich, der in einer ersten leitfähigen Folie (6) ausgebildet ist, die auf der Vorderseite (5) aufliegt,
• das Abscheiden eines Polymermaterials (13), das leitfähige Partikel umfasst, in einer Weise, die geeignet ist, dass das Polymermaterial (13), das leitfähige Partikel umfasst, nach dem Abscheiden eine Überdicke auf der Rückseite (9) bildet, wobei dieses Abscheiden gemäß mindestens einer der beiden folgenden Optionen durchgeführt wird:
∘ in mindestens einem in der Dicke des Substrats (4) ausgebildeten Verbindungsschacht (12), wobei der mindestens eine Verbindungsschacht auf der Höhe der Vorderseite (5) des Substrats (4) durch einen in der ersten leitfähigen Folie (6) ausgebildeten leitfähigen Bereich zumindest teilweise verschlossen ist,
∘ auf einem leitfähigen Bereich, der in einer zweiten leitfähigen Folie ausgebildet ist, die auf der Rückseite (9) aufliegt, **dadurch gekennzeichnet, dass**
• das Polymermaterial (13), das leitfähige Partikel umfasst, zum Zeitpunkt des Abscheidens eine Viskosität zwischen 1000 und 100000 mPa.s aufweist, gemessen unter oszillierender Scherbeanspruchung bei 25°C und einer Frequenz von 10Hz,
• das Verfahren einen Schritt des Fixierens des Polymermaterials (13), das leitfähige Partikel umfasst, umfasst, und
• einen Lagervorgang, der das Aufwickeln des Substrats (4) auf sich selbst, das mit der ersten leitfähigen Folie und dem Polymermaterial (13), das leitfähige Partikel umfasst, versehen ist, oder das Stapeln von Abschnitten des Substrats (4) in Form von Platten umfasst, wobei dieser Lagervorgang auf den Fixierungsschritt folgt und einem Vorgang des Integrierens des mindestens einen Moduls (2) in den Körper einer Chipkarte (1) vorausgeht, und während welchem Lagervorgang mindestens ein Abschnitt des Substrats (4), der mit der ersten leitfähigen Folie und dem Polymermaterial (13), das leitfähige Partikel umfasst, versehen ist, über oder unter einem anderen Abschnitt des Substrats (4) positioniert wird, wobei dieser andere Abschnitt des Substrats (4) entweder von dem auf sich selbst aufgewickelten Substrat (4) oder von einer Platte des Substrats (4) stammt, die über oder unter dem mindestens einen Abschnitt des Substrats (4) abgelegt ist, der mit der ersten leitfähigen Folie und dem Polymermaterial (13), das leitfähige Partikel umfasst, versehen ist, wobei das Polymermaterial (13), das leitfähige Partikel umfasst, durch den Fixierungsschritt so konfiguriert ist, dass es nicht an diesem anderen Abschnitt des Substrats (4) haftet und um durch mindestens das Anlegen eines Drucks die Verbindung des mindestens einen Moduls (2) mit einer Antenne (10) zu ermöglichen.

2. Verfahren nach Anspruch 1, wobei das Polymermaterial (13), das leitfähige Partikel umfasst, ein Material ist, das nach dem Fixieren einen Speichermodul von kleiner oder gleich 10^6 Pa und größer oder gleich 10^3 Pa unter oszillierender Beanspruchung bei einer Frequenz von 1 Hertz und bei einer Temperatur zwischen 120 und 170°C aufweist.

3. Verfahren nach einem der vorhergehenden Ansprüche, wobei das Abscheiden des Polymermaterials (13), das leitfähige Partikel umfasst, bei einer Temperatur zwischen 20 und 70°C durchgeführt wird.

4. Verfahren nach einem der Ansprüche 1 und 2, wobei das Polymermaterial (13), das leitfähige Partikel umfasst, ein thermoplastisches Harz mit einer Schmelztemperatur zwischen 90 und 140°C ist und wobei dieses Abscheiden des Polymermaterials (13) bei einer Temperatur zwischen 90 und 140°C durchgeführt wird.

5. Verfahren nach einem der Ansprüche 1 bis 3, wobei das Polymermaterial (13), das leitfähige Partikel umfasst, ein Haftklebstoff ist.

6. Verfahren nach einem der vorhergehenden Ansprüche, wobei das Polymermaterial (13), das leitfähige Partikel umfasst, thixotrope Eigenschaften aufweist, die durch eine Viskosität gekennzeichnet sind, die unter Scherbeanspruchung bei einer Frequenz von 0,1 Hz nach einer Zeit von 0 Sekunden bis 600 Sekunden nach dem Zeitpunkt des Abscheidens des Polymermaterials (13) größer als 300000 mPa.s wird.

7. Verfahren nach einem der vorhergehenden Ansprüche, wobei das Polymermaterial (13), das leitfähige Partikel umfasst, einen Fixierungsvorgang durchläuft, indem es einer Ultraviolettstrahlung ausgesetzt wird.

8. Verfahren nach einem der vorhergehenden Ansprüche, wobei das Polymermaterial (13), das leitfähige Partikel umfasst, nach dem Abscheiden einen Erwärmungsvorgang durchläuft.

9. Verfahren nach einem der vorhergehenden Ansprüche, wobei das Polymermaterial (13), das leitfähige Partikel umfasst, eine Überdicke auf der Rückseite (9) bildet, deren Höhe zwischen 60 und 250 Mikrometern liegt.

10. Verfahren zur Verbindung einer Antenne (10) und eines Chipkartenmoduls (2) einer Chipkarte (1), umfassend
• die Bereitstellung eines flexiblen dielektrischen Substrats (4) in Bandform, wobei das Substrat (4) eine durch eine Vorderseite (5) und eine Rückseite (9) begrenzte Dicke aufweist, die beide die Hauptflächen des Substrats (4) bilden, mit mindestens einem leitfähigen Bereich, der in einer ersten leitfähigen Folie (6) ausgebildet ist, die auf der Vorderseite (5) aufliegt,
• das Abscheiden eines Polymermaterials (13), das leitfähige Partikel umfasst, in einer Weise, die geeignet ist, dass das Polymermaterial (13), das leitfähige Partikel umfasst, nach dem Abscheiden eine Überdicke auf der Rückseite (9) bildet, wobei dieses Abscheiden gemäß mindestens einer der beiden folgenden Optionen durchgeführt wird:
∘ in mindestens einem in der Dicke des Substrats (4) ausgebildeten Verbindungsschacht (12), wobei der mindestens eine Verbindungsschacht auf der Höhe der Vorderseite (5) des Substrats (4) durch einen in der ersten leitfähigen Folie (6) ausgebildeten leitfähigen Bereich zumindest teilweise verschlossen ist,
∘ auf einem leitfähigen Bereich, der in einer zweiten leitfähigen Folie ausgebildet ist, die auf der Rückseite (9) aufliegt,
• die Bereitstellung eines Kartenkörpers, in den eine Antenne (10) integriert ist, die mindestens zwei Verbindungsenden (11) aufweist,
• die Verbindung von mindestens einem der beiden Verbindungsenden (11) mit dem leitfähigen Bereich, der in der ersten leitfähigen Folie (6) ausgebildet ist, der den mindestens einen Verbindungsschacht (12), in dem das Polymermaterial (13), das leitfähige Partikel umfasst, abgeschieden ist, zumindest teilweise verschließt, oder mit dem leitfähigen Bereich, der in der zweiten leitfähigen Folie ausgebildet ist, die auf der Rückseite (9) aufliegt und auf dem das Polymermaterial, das leitfähige Partikel umfasst, abgeschieden ist, wobei dieses Verfahren **dadurch gekennzeichnet ist, dass**
• das Polymermaterial (13), das leitfähige Partikel umfasst, zum Zeitpunkt des Abscheidens eine Viskosität zwischen 1000 und 100000 mPa.s aufweist, gemessen unter oszillierender Scherbeanspruchung bei 25°C und einer Frequenz von 10Hz,
• es einen Schritt des Fixierens des Polymermaterials (13), das leitfähige Partikel umfasst, und einen Lagervorgang umfasst, der das Aufwickeln des Substrats (4) auf sich selbst, das mit der ersten leitfähigen Folie und dem Polymermaterial (13), das leitfähige Partikel umfasst, versehen ist, oder dasStapeln von Abschnitten des Substrats (4) in Form von Platten umfasst, wobei dieser Lagervorgang auf den Fixierungsschritt folgt und einem Vorgang des Integrierens des mindestens einen Moduls (2) in den Körper einer Chipkarte (1) vorausgeht, und während welchem Lagervorgang mindestens ein Abschnitt des Substrats (4), der mit der ersten leitfähigen Folie und dem Polymermaterial (13), das leitfähige Partikel umfasst, versehen ist, über oder unter einem anderen Abschnitt des Substrats (4) positioniert wird, wobei dieser andere Abschnitt des Substrats (4) entweder von dem auf sich selbst aufgewickelten Substrat (4) oder von einer Platte des Substrats (4) stammt, die über oder unter dem mindestens einen Abschnitt des Substrats (4) abgelegt ist, der mit der ersten leitfähigen Folie und dem Polymermaterial (13), das leitfähige Partikel umfasst, versehen ist, wobei das Polymermaterial (13), das leitfähige Partikel umfasst, durch den Fixierungsschritt so konfiguriert ist, dass es nicht an diesem anderen Abschnitt des Substrats (4) haftet und um durch mindestens das Anlegen eines Drucks die Verbindung des mindestens einen Moduls (2) mit einer Antenne (10) zu ermöglichen.

11. Verfahren zur Verbindung nach Anspruch 10, wobei die Verbindung durch Anlegen eines Drucks zwischen 0,5 und 5 bar mit einer Thermode, deren Temperatur zwischen 170 und 210°C liegt, und während einer Zeit von weniger als 3 Sekunden betrieben wird.

12. Verfahren zur Verbindung nach Anspruch 10 oder 11, wobei die Verbindung zwischen der Antenne (10) und dem Chipkartenmodul (2) der Chipkarte (1) durch Aufbringen des Polymermaterials (13), das leitfähige Partikel umfasst, auf einen Endabschnitt der Antenne (10) realisiert wird, der Zickzackmuster bildet, die voneinander beabstandete Leiterbahnen mit einem Abstand von weniger als 250 Mikrometern umfassen.

## Claims

1. A method for manufacturing at least one smart card module (2) of a smart card (1) comprising
• providing a flexible dielectric substrate (4) in tape form, the substrate (4) having a thickness delimited by a front face (5) and a rear face (9), both forming the main faces of the substrate (4), with at least one conductive land formed in a first conductive foil (6) resting on the front face (5),
• depositing a polymer material (13) comprising conductive particles in a suitable manner so that the polymer material (13) comprising conductive particles forms, after deposition, an extra thickness on the rear face (9), this deposition being carried out according to at least one of the following two options:
∘ in at least one connection well (12) formed in the thickness of the substrate (4), said at least one connection well being at least partially closed off at the level of the front face (5) of the substrate (4) by a conductive land formed in the first conductive foil (6),
∘ on a conductive land formed in a second conductive foil resting on the rear face (9), **characterised in that**
• the polymer material (13) comprising conductive particles has, at the moment of deposition, a viscosity comprised between 1000 and 100000 mPa.s, measured under oscillatory shear stress at 25°C and at a frequency of 10Hz,
• the method comprises a step of setting the polymer material (13) comprising conductive particles, and
• a storage operation, comprising the winding of the substrate (4) onto itself, provided with the first conductive foil and the polymer material (13) comprising conductive particles, or the stacking of portions of the substrate (4) in the form of sheets, this storage operation succeeding the setting step and preceding an operation consisting of integrating said at least one module (2) into the body of a smart card (1), and during which storage operation at least one portion of the substrate (4), provided with the first conductive foil and the polymer material (13) comprising conductive particles, is positioned above or below another portion of the substrate (4), this other portion of the substrate (4) originating either from the substrate (4) wound onto itself, or from a sheet of substrate (4) placed above or below said at least one portion of the substrate (4), provided with the first conductive foil and the polymer material (13) comprising conductive particles, the polymer material (13) comprising conductive particles being configured by the setting step not to adhere to this other portion of the substrate (4) and to allow, by at least the application of pressure, the connection of said at least one module (2) to an antenna (10).

2. Method according to claim 1, wherein the polymer material (13) comprising conductive particles is a material having a storage modulus, after setting, of less than or equal to 10^6 Pa and greater than or equal to 10^3 Pa, under oscillatory stress at a frequency of 1 Hertz, and at a temperature comprised between 120 and 170°C.

3. Method according to any one of the preceding claims, wherein the deposition of the polymer material (13) comprising conductive particles is carried out at a temperature comprised between 20 and 70°C.

4. Method according to any one of claims 1 and 2, wherein the polymer material (13) comprising conductive particles is a thermoplastic resin having a melting temperature comprised between 90 and 140°C and wherein this deposition of the polymer material (13) is carried out at a temperature comprised between 90 and 140°C.

5. Method according to any one of claims 1 to 3, wherein the polymer material (13) comprising conductive particles is a pressure-sensitive adhesive.

6. Method according to any one of the preceding claims, wherein the polymer material (13) comprising conductive particles has thixotropic properties **characterised by** a viscosity becoming greater than 300000 mPa.s, under shear stress at a frequency of 0.1Hz, after a time ranging from 0 seconds to 600 seconds following the moment of deposition of the polymer material (13).

7. Method according to any one of the preceding claims, wherein the polymer material (13) comprising conductive particles undergoes a setting operation by being exposed to ultraviolet radiation.

8. Method according to any one of the preceding claims, wherein the polymer material (13) comprising conductive particles undergoes, after deposition, a heating operation.

9. Method according to any one of the preceding claims, wherein the polymer material (13) comprising conductive particles forms an extra thickness on the rear face (9) whose height is comprised between 60 and 250 micrometres.

10. Method for interconnecting an antenna (10) and a smart card module (2) of a smart card (1) comprising
• providing a flexible dielectric substrate (4) in tape form, the substrate (4) having a thickness delimited by a front face (5) and a rear face (9), both forming the main faces of the substrate (4), with at least one conductive land formed in a first conductive foil (6) resting on the front face (5),
• depositing a polymer material (13) comprising conductive particles in a suitable manner so that the polymer material (13) comprising conductive particles forms, after deposition, an extra thickness on the rear face (9), this deposition being carried out according to at least one of the following two options:
∘ in at least one connection well (12) formed in the thickness of the substrate (4), said at least one connection well being at least partially closed off at the level of the front face (5) of the substrate (4) by a conductive land formed in the first conductive foil (6),
∘ on a conductive land formed in a second conductive foil resting on the rear face (9),
• providing a card body in which is integrated an antenna (10) comprising at least two connection ends (11),
• connecting at least one of the two connection ends (11) with said conductive land formed in the first conductive foil (6) at least partially closing off said at least one connection well (12) in which is deposited the polymer material (13) comprising conductive particles, or with said conductive land formed in the second conductive foil resting on the rear face (9) and on which is deposited the polymer material comprising conductive particles, this method being **characterised in that**
• the polymer material (13) comprising conductive particles has, at the moment of deposition, a viscosity comprised between 1000 and 100000 mPa.s, measured under oscillatory shear stress at 25°C and at a frequency of 10Hz,
• it comprises a step of setting the polymer material (13) comprising conductive particles, and a storage operation, comprising the winding of the substrate (4) onto itself, provided with the first conductive foil and the polymer material (13) comprising conductive particles, or the stacking of portions of the substrate (4) in the form of sheets, this storage operation succeeding the setting step and preceding an operation consisting of integrating said at least one module (2) into the body of a smart card (1), and during which storage operation at least one portion of the substrate (4), provided with the first conductive foil and the polymer material (13) comprising conductive particles, is positioned above or below another portion of the substrate (4), this other portion of the substrate (4) originating either from the substrate (4) wound onto itself, or from a sheet of substrate (4) placed above or below said at least one portion of the substrate (4), provided with the first conductive foil and the polymer material (13) comprising conductive particles, the polymer material (13) comprising conductive particles being configured by the setting step not to adhere to this other portion of the substrate (4) and to allow, by at least the application of pressure, the connection of said at least one module (2) to an antenna (10).

11. Interconnection method according to claim 10, wherein the connection is operated by applying a pressure comprised between 0.5 and 5 bars, with a thermode whose temperature is comprised between 170 and 210°C and for a time of less than 3 seconds.

12. Interconnection method according to claim 10 or 11, wherein the connection between the antenna (10) and the smart card module (2) of the smart card (1) is carried out by applying the polymer material (13) comprising conductive particles onto an end portion of the antenna (10) forming zigzags comprising tracks spaced from each other with a pitch of less than 250 micrometres.
